# FASCICULE DE BREVET EUROPEEN

(11) **EP 0 743 037 B1**
(45) Date de publication et mention de la délivrance du brevet: **28.10.1998**
(21) Numéro de dépôt: 96401026.8
(22) Date de dépôt: 10.05.1996
(51) Int. Cl.: A47J 31/057, A47J 31/44

(54) **Cafetière ménagère**
Haushalts-Kaffeemaschine
Domestic coffee machine

(30) Priorité: 18.05.1995 FR 9505875
(43) Date de publication de la demande: 20.11.1996
(73) Titulaire: MOULINEX S.A., 75008 Paris (FR)
(72) Inventeur: Diore, Christian, 61100 Saint Germain du Corbeis (FR); Jouatel, Christian Bernard, 61250 Radon (FR)
(74) Mandataire: Busquets, Jean-Pierre

(56) Documents cités:
- WO-A-95/01118
- DE-A- 2 045 677
- DE-U- 8 508 419
- DE-U- 9 312 009
- GB-A- 2 146 236
- US-A- 4 667 583

## Description

L'invention se rapporte aux cafetières ménagères comprenant, dans un boîtier présentant une paroi latérale, un réservoir d'eau froide présentant une paroi latérale frontale et une paroi latérale postérieure, et alimentant un chauffe-eau alimentant lui-même une goulotte d'arrosage dont le débouché est agencé en position d'arrosage au-dessus d'un porte-filtre qui est monté mobile dans le boîtier et dont le fond présente un orifice d'écoulement situé au-dessus d'une verseuse collectrice d'infusion reposant sur un socle.

Dans les cafetières de ce type, le porte-filtre est généralement agencé dans la région antérieure du boîter, tandis que le réservoir d'eau froide situé dans la région postérieure du boîtier embrasse partiellement le porte-filtre ; cette disposition permet d'obtenir à la fois un encombrement réduit et un remplissage commode en mouture de café. Cependant, il s'avère qu'à l'utilisation ce type de cafetière est incommode notamment lorsqu'elle est placée sur un plan de travail et presque adossée à un mur. En effet, l'opération de remplissage en eau exige une certaine dextérité puisqu'il faut verser soit par dessus le filtre, soit latéralement. Mais dans ce dernier cas, la section de remplissage du réservoir est assez étroite puisque le réservoir présente une section horizontale en forme de lunule.

En outre, du fait de cette incommodité de remplissage, il arrive que le déversement se produise hors du réservoir provoquant, non seulement des salissures sur le boîtier et le socle, mais aussi des infiltrations d'eau dans le boîtier susceptibles d'engendrer des courts circuits électriques.

On connaît également, d'après le document DE-U-8508419, une cafetière du type décrit ci-dessus, dans laquelle le réservoir d'eau est situé dans la région antérieure du boitier et présente une forme de U dont les deux ailes latérales entourent le porte-filtre. Cette disposition ne permet pas d'obtenir un encombrement réduit en largeur de construction de la cafetière, et l'opération de remplissage en eau n'est pas commode puisqu'il faut verser l'eau latéralement.

Le but de l'invention est donc de remédier aux inconvénients cités ci-dessus, tout en conservant une construction compacte de la cafetière.

Selon l'invention, le réservoir d'eau froide est disposé en surplomb de la verseuse reposant sur le socle, et le porte-filtre est agencé derrière la paroi latérale postérieure du réservoir d'eau froide.

Ainsi, grâce à la cafetière selon l'invention, le réservoir d'eau se situe en face frontale de la cafetière et donc offre une grande commodité de remplissage, commodité amplifiée par la section de grande largeur qui fait face à l'utilisateur, ainsi qu'un encombrement réduit de la cafetière, à la fois en largeur et en hauteur de construction.

Selon une autre caractéristique de l'invention, une fenêtre transparente est pratiquée dans la paroi latérale frontale du réservoir d'eau froide, et est visible de l'extérieur à travers une lumière pratiquée dans le boitier. Cette fenêtre agencée dans la région antérieure du boitier assure ainsi une visualisation parfaite , d'une part, du niveau d'eau atteint au cours d'une opération de remplissage du réservoir d'eau froide et d'autre part, du niveau d'eau restant au cours du fonctionnement de la cafetière. Cette nouvelle conception de la cafetière forme ainsi un ensemble d'emploi pratique pour l'utilisateur.

En outre, grâce à cette fenêtre, il n'est plus nécessaire d'utiliser un tube à niveau d'eau ajouté au réservoir et d'un coût non négligeable.

D'autres caractéristiques et avantages de l'invention ressortiront d'ailleurs des revendications dépendentes 2-8 de la description qui va suivre, prise à titre d'exemple non limitatif, en référence aux dessins annexés dans lesquels :
- la figure 1 est une vue schématique d'une cafetière selon l'art antérieur ;
- les figures 2 est une vue en coupe verticale d'une cafetière selon l'invention ;
- la figure 3 est une vue en perspective, à plus faible échelle, de la cafetière de la figure 2 ;
- la figure 4 est une vue de dessus, à échelle agrandie, de la cafetière selon la linge III-III de la figure 2.

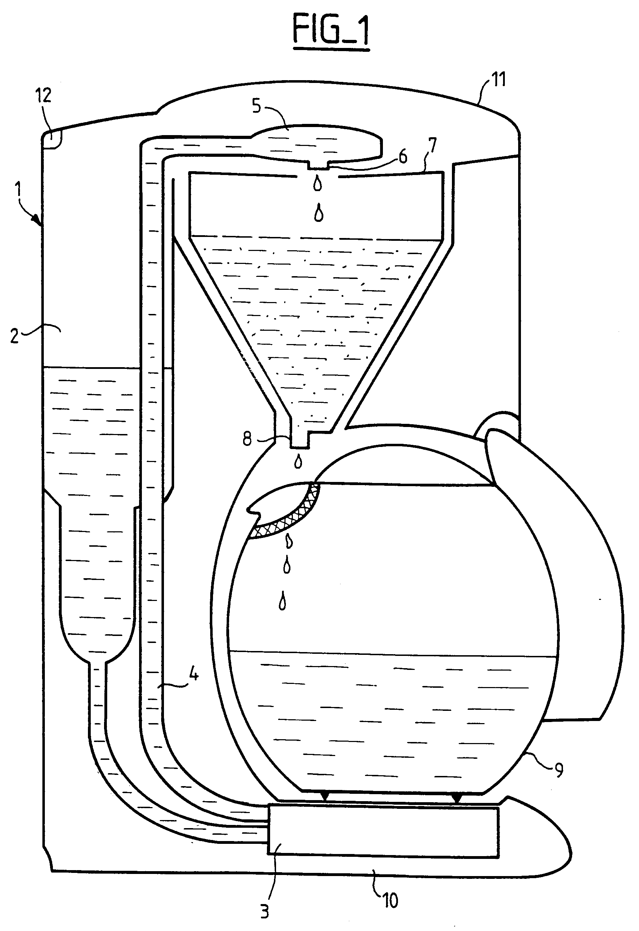

Comme on le voit sur la figure 1, une cafetière ménagère du type goutte à goutte selon l'art antérieur, comprend dans un boîtier 1, un réservoir d'eau froide 2 ainsi qu'un chauffe-eau 3 alimenté par ce réservoir et alimentant lui-même par un tube ascendant 4, une goulotte d'arrosage 5 dont le débouché 6 est agencée en position d'arrosage au dessus d'un porte-filtre 7 connu en soi qui est monté mobile dans ledit boîtier 1 et destiné à recevoir de la mouture de café.

Le fond du porte-filtre 7 présente un orifice d'écoulement 8 situé au dessus d'une verseuse 9 collectrice d'infusion reposant sur un socle 10 chauffé par le chauffe-eau 3.

Ladite cafetière comporte en outre un couvercle 11 qui, d'une part, s'étend au dessus du réservoir d'eau froide 2, de la goulotte d'arrosage 5 et du porte-filtre 7 et qui est monté articulé sur le boîtier 1 autour d'un axe horizontal 12.

Le boîtier 1 et donc Le réservoir d'eau froide 2 montrés en partie, ont sensiblement en coupe horizontale la forme d'une lunule et entourent partiellement la verseuse 9 posée sur le socle 10 ainsi que le porte-filtre 7 disposé au dessus. La section de remplissage du réservoir d'eau agencé dans la région postérieure du boîtier, même si elle s'étend globalement sur une demi-circonférence, présente ainsi une largeur étroite sur la plus grande partie de son étendue et, de ce fait, lors d'une opération de remplissage, l'utilisateur doit agir avec beaucoup de précaution pour remplir proprement ledit réservoir.

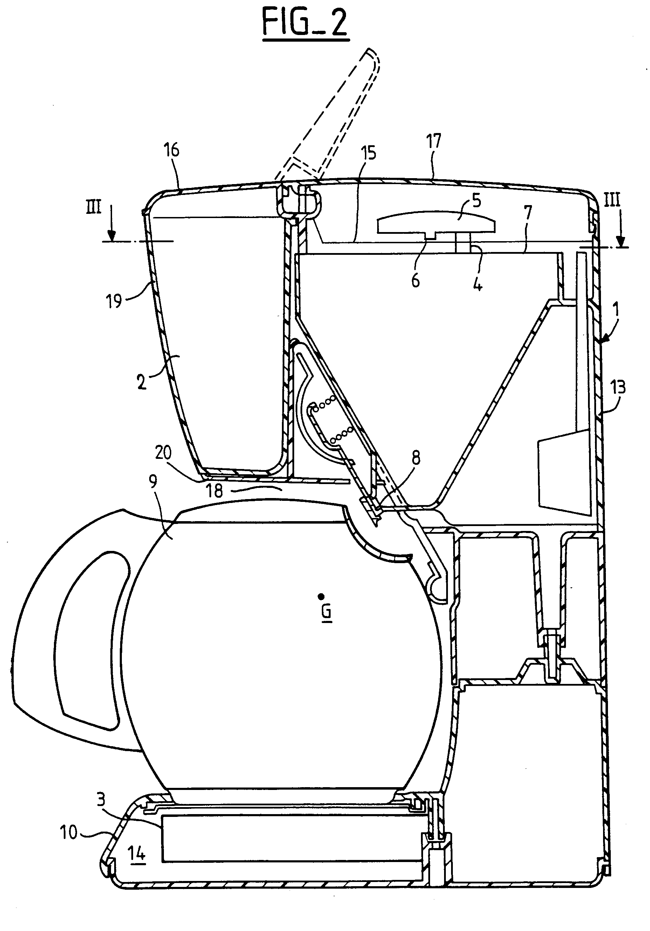

La figure 2 montre une cafetière ménagère du type goutte à goutte selon l'invention. Ladite cafetière est équipée des principaux éléments décrits sur la figure 1 et désignés par les mêmes références.

Selon l'invention, le réservoir d'eau froide 2 de ladite cafetière surplombe le socle 10 et le porte-filtre 7 de ladite cafetière est agencé derrière le réservoir d'eau froide 2.

Le réservoir d'eau froide 2 présente une paroi latérale frontale dans laquelle est pratiquée une fenêtre transparente 19 visible de l'extérieur à travers une lumière 20 pratiquée dans le boîtier 1. Dans un exemple de réalisation préférentiel, la paroi latérale frontale du réservoir 2 est réalisée en un matériau plastique transparent.

Le boîtier 1 présente une paroi latérale 13 de forme générale tubulaire dont l'une 14 des extrémité est fermée par le socle 10 et dont l'autre extrémité 15 comporte au moins un couvercle mobile. Dans le mode de réalisation représenté, l'extrémité 15 comporte deux couvercles articulés 16 et 17 sur le boîtier 1, le couvercle 16 fermant le réservoir d'eau et le couvercle 17 fermant le porte-filtre 17.

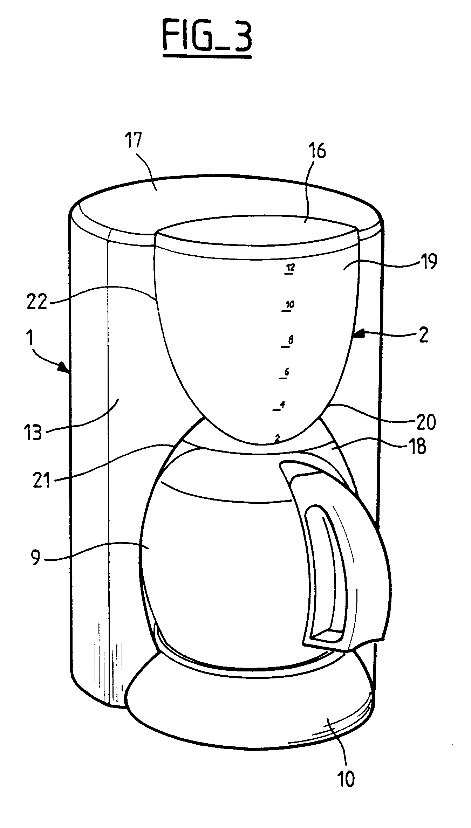

Comme on le voit mieux sur la figure 3, la région frontale de la paroi latérale 13 présente au dessus du socle 10 une niche de réception 18 de la verseuse 9 et, au dessus de cette niche, la lumière 20 au travers de laquelle est visible la fenêtre transparente 19 du réservoir d'eau froide 2. La niche de réception 18 présente un profil d'entrée 21 de forme générale parabolique tandis que la lumière 20 présente un profil 22 de forme générale également parabolique mais inversé par rapport au profil 21, le profil parabolique 22 intersectant le profil d'entrée 21

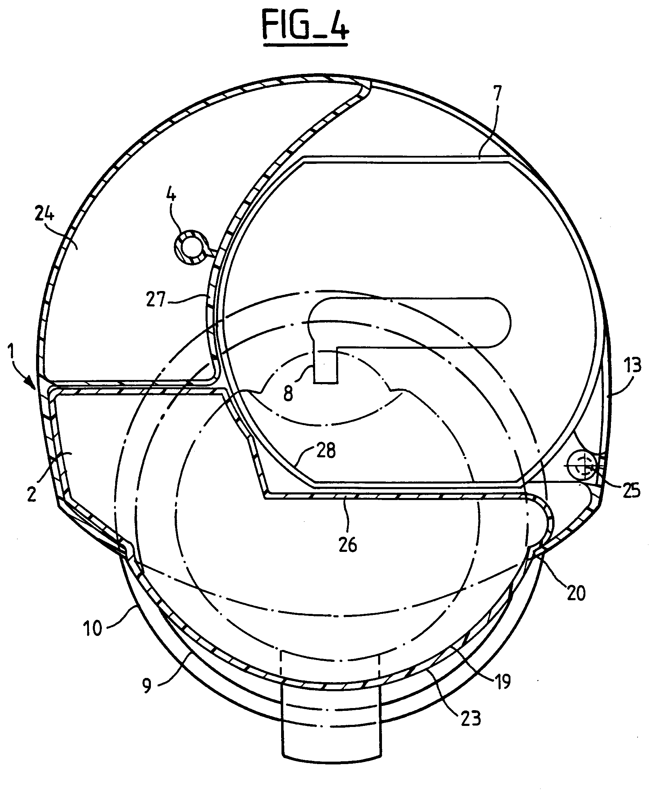

Comme le montre la figure 4, le réservoir d'eau froide 2 contenu en grande partie dans le boîtier 1 présente une forme générale hémicylindrique. La fenêtre transparente 20 présente un galbe 23 faisant saillie de la lumière 19 du boîtier 1. La goulotte 5 non représentée sur cette figure est alimentée au moyen du tube ascendant 4 situé dans un compartiment 24 agencé derrière le réservoir d'eau froide 2 et latéralement au porte filtre 7. Le porte-filtre 7 agencé derrière le réservoir d'eau 2 est monté pivotant autour d'un axe vertical 25. Ledit axe 25 est monté articulé au voisinage de la périphérie du boîtier 1 dans une région opposée au compartiment 24. La disposition du réservoir d'eau 2 en majeure partie dans la région antérieure du boîtier 1 permet de déplacer le centre de gravité G de la cafetière. Ainsi le centre de gravité G est situé dans la niche 18 au voisinage de la verticale passant par le centre du socle ce qui améliore la stabilité de ladite cafetière avec ou sans eau dans le réservoir 2. De manière à réaliser un agencement compact du réservoir 2, du compartiment 24 et du porte-filtre 7 pour les intégrer pratiquement dans la paroi tubulaire 13 du boîtier 1, le réservoir 2 et le compartiment 24 présentent respectivement des parois internes 26-27 qui embrassent la paroi interne 28 du porte-filtre 7. Ainsi, dans la région supérieure du boîtier 1, seul le galbe 23 fait saillie de la paroi latérale 13 du boîtier.

On comprendra que la cafetière ainsi constituée est d'une utilisation aisée pour l'utilisateur. En effet, lors d'une opération de remplissage du réservoir d'eau froide 2, l'utilisateur fait pivoter le couvercle frontal 16 jusqu'à une position escamotée représentée en traits interrompus sur la figure 2. Cette position fait apparaître, dans la région antérieure du boîtier la large section de remplissage dudit réservoir. L'eau étant verser rapidement et sans éclaboussure dans ledit réservoir, l'utilisateur voit apparaître directement le contenu dudit réservoir au fur et à mesure du remplissage. Lorsque cette opération est terminée l'utilisateur ferme le couvercle 16. Ensuite l'utilisateur fait pivoter le porte-filtre 7 et verse aisément la mouture de café dans ledit porte-filtre 7 grâce au positionnement du réservoir d'eau 2 au dessus de socle 10 qui assure ainsi une meilleure stabilité de la cafetière. L'utilisateur ayant replacé le porte-filtre 7, n'a plus qu'à déclencher le fonctionnement de la cafetière. Il peut ainsi surveiller à distance le bon écoulement du café dans la verseuse et visualiser en un clin d'oeil la fin de l'opération grâce à la transparence de la fenêtre galbée 19.

## Revendications

1. Cafetière ménagère comprenant, dans un boîtier (1) présentant une paroi latérale (13), un réservoir d'eau froide (2) présentant une paroi latérale frontale et une paroi latérale postérieure, et alimentant un chauffe-eau (3) alimentant lui-même une goulotte d'arrosage (5) dont le débouché (6) est agencé en position d'arrosage au-dessus d'un porte-filtre (7) qui est monté mobile dans le boitier (1) et dont le fond présente un orifice d'écoulement (8) situé au-dessus d'une verseuse (9) collectrice d'infusion reposant sur un socle (10),
**caractérisée en ce que** le réservoir d'eau froide (2) est disposé en surplomb de la verseuse (9) reposant sur le socle (10), et en ce que le porte-filtre (7) est agencé derrière la paroi latérale postérieure du réservoir d'eau froide (2).

2. Cafetière ménagère selon la revendication 1,
**caractérisée en ce qu'**une fenêtre transparente (19) est pratiquée dans la paroi latérale frontale du réservoir d'eau froide (2), et est visible de l'extérieur à travers une lumière (20) pratiquée dans le boîtier.

3. Cafetière ménagère selon la revendication 2,
**caractérisée en ce que** la paroi latérale (13) du boîtier (1) présente une forme générale tubulaire dont l'une des extrémités (14) est fermée par le socle (10), et dont l'autre extrémité (15) comporte au moins un couvercle mobile (16, 17), et la région frontale de la paroi latérale (13) du boîtier (1) présente au-dessus du socle (10) une niche de réception (18) de la verseuse (9) et, au-dessus de cette niche (18), la lumière (20) au travers de laquelle est visible la fenêtre transparente (19) du réservoir d'eau froide (2).

4. Cafetière ménagère selon la revendication 3,
**caractérisée en ce que,** le réservoir d'eau froide (2) est contenu en grande partie dans le boîtier (1), et la fenêtre présente un galbe (23) faisant saillie de la lumière (20) du boîtier (1).

5. Cafetière ménagère selon la revendication 4,
**caractérisée en ce que,** le socle (10) comportant le chauffe-eau (3), la goulotte (5) est alimentée au moyen d'un tube ascendant (4) situé dans un compartiment (24) agencé derrière le réservoir d'eau froide (2) et latéralement au porte-filtre (7).

6. Cafetière ménagère selon la revendication 5,
**caractérisée en ce que,** le réservoir (2), le compartiment (24) et le porte-filtre (7) sont pratiquement intégrés dans la paroi tubulaire (13) du boîtier (1), et les parois internes (26 et 27) du réservoir (2) et du compartiment (24) embrassent la paroi interne (28) du porte-filtre (7).

7. Cafetière ménagère selon la revendication 6,
**caractérisée en ce que,** le porte-filtre (7) est monté pivotant autour d'un axe vertical (25) agencé au voisinage de la périphérie du boîtier (1) dans une région opposée au compartiment (24).

8. Cafetière ménagère selon la revendication 6 ou 7;
**caractérisée en ce que,** son centre de gravité G est situé dans la niche (18) au voisinage de la verticale passant par le centre du socle (10).

## Claims

1. Domestic coffee machine comprising, in a casing (1) having a lateral wall (13), a cold water tank (2) comprising a front lateral wall and a rear lateral wall and supplying a water heating unit (32) which itself supplies a sprinkling chute (5), the mouth of which is arranged in a sprinkling position above a filter carrier (7) which is movably mounted in the casing (1) and the bottom of which comprises an outflow opening (8) located above a jug (9) for collecting the infusion which rests on a base (10),
**characterised in that** the cold water tank (2) is located overhanging the jug (9) resting on the base (10) and in that the filter carrier (7) is arranged behind the rear lateral wall of the cold water tank (2).

2. Domestic coffee machine in accordance with claim 1,
**characterised in that** a transparent window (19) is made in the front lateral wall of the cold water tank (2) and can be seen from the outside through an opening (20) made in the casing.

3. Domestic coffee machine in accordance with claim 2,
**characterised in that** the lateral wall (13) of the casing (1) has a generally tubular form, one of the ends (14) of which is closed by the base (10) and the other end (15) of which comprises at least one movable cover (16, 17), and the front region of the lateral wall (13) of the casing (1) comprises above the base (10) a recess (18) for receiving the jug (9) and, above said recess (18), the opening (20) through which the transparent window (19) of the cold water tank (2) can be seen.

4. Domestic coffee machine in accordance with claim 3,
**characterised in that** the cold water tank (2) is mainly contained inside the casing (1) and the window comprises a curve (23) projecting through the opening (20) in the casing (1).

5. Domestic coffee machine in accordance with claim 4,
**characterised in that,** the base (10) comprising the water heating unit (3), the chute (5) is supplied by means of an ascending pipe (4) located in a compartment (24) made behind the cold water tank (2) and laterally to the filter carrier (7).

6. Domestic coffee machine in accordance with claim 5,
**characterised in that** the tank (2), the compartment (24) and the filter carrier (7) are practically integrated in the tubular wall (13) of the casing (1), and the inner walls (26 and 27) of the tank (2) and of the compartment (24) fit closely against the inner wall (28) of the filter carrier (7).

7. Domestic coffee machine in accordance with claim 6,
**characterised in that** the filter carrier (7) is mounted to pivot about a vertical axis (25) arranged near the periphery of the casing (1) in a region opposite to the compartment (24).

8. Domestic coffee machine in accordance with claim 6 or 7,
**characterised in that** its centre of gravity G is located in the recess (18) near the vertical line passing through the centre of the base (10).

## Patentansprüche

1. Haushaltskaffeemaschine, welche in einem Gehäuse (1) mit einer Seitenwand (13) einen Kaltwasserbehälter (2) mit einer vorderen und einer hinteren Seitenwand aufweist, der einen Wassererhitzer (3) speist, der wiederum eine Begießrinne (5) speist, deren Mündung in Begießstellung oberhalb eines Filterhalters (7) angeordnet ist, der im Gehäuse (1) beweglich montiert ist und dessen Boden eine Austrittsöffnung (8) aufweist, die oberhalb eines auf einem Sockel (10) ruhenden Auffang- und Ausgießbehälters (Kanne) (9) für den Aufguß angeordnet ist, **dadurch gekennzeichnet, daß** der Kaltwasserbehälter (2) oberhalb der auf dem Sockel (10) ruhenden Kanne (9) angeordnet ist, und daß der Filterhalter (7) hinter der hinteren Seitenwand des Kaltwasserbehälters (2) angeordnet ist.

2. Haushaltskaffeemaschine nach Anspruch 1, **dadurch gekennzeichnet, daß** ein durchscheinendes Fenster (19) in der vorderen Seitenwand des Kaltwasserbehälters (2) ausgebildet ist und von außen durch eine im Gehäuse ausgebildete Öffnung (20) sichtbar ist.

3. Haushaltskaffeemaschine nach Anspruch 2, **dadurch gekennzeichnet, daß** die Seitenwand (13) des Gehäuses (1) eine allgemein rohrförmige Form aufweist, deren eines Ende (14) vom Sockel (10) geschlossen ist und deren anderes Ende (15) mindestens einen beweglichen Deckel (16, 17) aufweist, und daß der Vorderbereich der Seitenwand (13) des Gehäuses (1) oberhalb des Sockels (10) eine Nische zur Aufnahme der Kanne (9) und oberhalb dieser Nische (18) die Öffnung (20) aufweist, durch die das durchscheinende Fenster (19) des Kaltwasserbehälters (2) sichtbar ist.

4. Haushaltskaffeemaschine nach Anspruch 3, **dadurch gekennzeichnet, daß** der Kaltwasserbehälter (2) zum Großteil im Gehäuse (1) enthalten ist und daß das Fenster eine Wölbung (23) aufweist, die aus der Öffnung (20) des Gehäuses (1) herausragt.

5. Haushaltskaffeemaschine nach Anspruch 4, **dadurch gekennzeichnet, daß** der Sockel (10) den Wassererhitzer (3) enthält und die Renne (5) durch ein Steigrohr (4) gespeist wird, das in einem Abteil (24) angeordnet ist, das sich hinter dem Kaltwasserbehälter (2) und seitliche vom Filterhalter (7) befindet.

6. Haushaltskaffeemaschine nach Anspruch 5, **dadurch gekennzeichnet, daß** der Behälter (2), das Abteil (24) und der Filterhalter (7) praktisch in der rohrförmigen Seitenwand (13) des Gehäuses (1) integriert sind, und daß die Innenwände (26 und 27) des Behälters (2) und des Abteils (24) die Innenwand (28) des Filterhalters (7) umgeben.

7. Haushaltskaffeemaschine nach Anspruch 6, **dadurch gekennzeichnet, daß** der Filterhalter (7) um eine vertikale Achse (25) schwenkbar montiert ist, die nahe dem Umfang des Gehäuses (1) in einem dem Abteil (24) gegenüberliegenden Bereich angeordnet ist.

8. Haushaltskaffeemaschine nach Anspruch 6 oder 7, **dadurch gekennzeichnet, daß** ihr Schwerpunkt G nahe der durch die Mitte des Sockels (10) verlaufenden Vertikalen liegt.
